# EUROPEAN PATENT APPLICATION

(11) **EP 2 252 123 A1**
(43) Date of publication of application: **17.11.2010**
(21) Application number: 09716906.4
(22) Date of filing: 20.02.2009
(51) Int. Cl.: H04W 72/04, H04J 1/00, H04J 3/00, H04J 11/00, H04W 88/02

(54) **MOBILE COMMUNICATION SYSTEM**

(30) Priority: 06.03.2008 JP 2008057027
(71) Applicant: NTT DOCOMO, INC., Tokyo 100-6150 (JP)
(72) Inventor: FUJII, Hiromasa, Tokyo 100-6150 (JP); YOSHINO, Hitoshi, Tokyo 100-6150 (JP)
(74) Representative: HOFFMANN EITLE
(86) International application number: PCT/JP2009/053055
(87) International publication number: WO 2009/110333

(57) **Abstract**

In a mobile communication system including a base station and a user terminal which communicate with each other according to FDD (frequency division duplex), an uplink frequency band and a downlink frequency band which are adjacent to each other are divided into plural time slots. The user terminal includes an interference detecting unit configured to detect interference in the downlink frequency band; and a time slot information generating unit configured to generate information about an available time slot in the downlink frequency band based on the detected interference. The base station includes a time slot allocating unit configured to allocate a time slot to be used in the downlink frequency band based on the information about the time slot received from the user terminal.

## Description

### TECHNICAL FIELD

The present invention relates to a mobile communication system. More specifically, the present invention relates to a mobile communication system including a base station and a user terminal which communicate with each other according to FDD (frequency division duplex).

### BACKGROUND ART

In a mobile communication system, an FDD (frequency division duplex) scheme is used to implement simultaneous transmission and reception by dividing the frequency band used by a base station and a user terminal into one or more transmission frequency bands and one or more reception frequency bands. Since different frequency bands are used for uplink and downlink according to the FDD scheme, data can be independently transmitted in uplink and downlink, respectively. A filter (duplexer) is used for the base station and the user terminal to achieve separation between transmission signals and reception signals. The FDD scheme is described in 3GPP TS 25.201, "Physical layer - General description", for example.

### DISCLOSURE OF INVENTION

### [PROBLEM(S) TO BE SOLVED BY THE INVENTION]

When an uplink frequency band and a downlink frequency band according to the FDD scheme are adjacent to each other, a wider guard band is needed compared to the case where two downlink frequency bands are adjacent to each other or the case where two uplink frequency bands according to the FDD scheme are adjacent to each other. There are two reasons for this.

First, in uplink, the base station may experience interference from the downlink frequency band of another base station. For example, as shown in Fig. 1, when a base station BS2 transmits data in a downlink frequency band D1 while a base station BS1 is receiving data from a user terminal MS1 in an uplink frequency band U6, the base station BS1 experiences interference from the base station BS2. Since the interference source is the base station which has higher transmission power and higher antenna gain than the user terminal and since the propagation environment may be better due to a line-of-sight path between them, the impact of interference between the frequency bands may be greater.

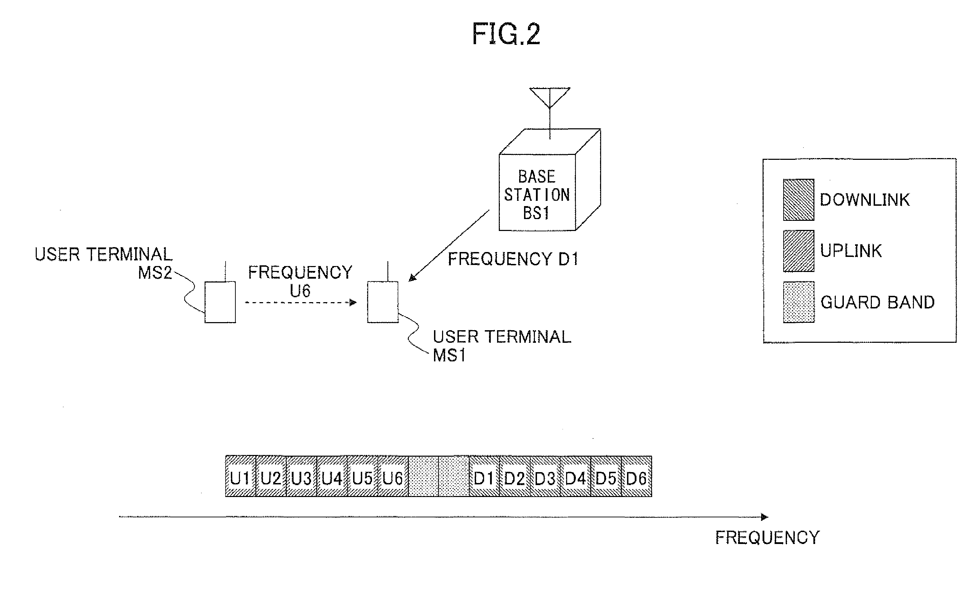

Second, in downlink, the user terminal may experience interference from the uplink frequency band of another user terminal. For example, as shown in Fig. 2, when a user terminal MS2 transmits data in an uplink frequency band U6 while a user terminal MS1 is receiving data from a base station BS1 in a downlink frequency band D1, the user terminal MS1 experiences interference from the user terminal MS2. Since the user terminals may be very close to each other, the impact of interference between the frequency bands may be greater, although the interference source is the user terminal which has lower transmission power and lower antenna gain.

In order to solve at least one of such problems, it is a general object of the present invention to reduce interference between the uplink frequency band and the downlink frequency band according to the FDD scheme.

### [MEANS FOR SOLVING THE PROBLEM(S)]

In one aspect of the present invention, there is provided a mobile communication system including:
a base station and a user terminal which communicate with each other according to FDD (frequency division duplex), where an uplink frequency band and a downlink frequency band which are adjacent to each other are divided into plural time slots,
the user terminal including
an interference detecting unit configured to detect interference in the downlink frequency band; and
a time slot information generating unit configured to generate information about an available time slot in the downlink frequency band based on the detected interference; and
the base station including
a time slot allocating unit configured to allocate a time slot to be used in the downlink frequency band based on the information about the time slot received from the user terminal.

### [ADVANTAGEOUS EFFECT OF THE INVENTION]

According to an embodiment of the present invention, interference between the uplink frequency band and the downlink frequency band according to the FDD scheme can be reduced.

### BRIEF DESCRIPTION OF THE DRAWINGS

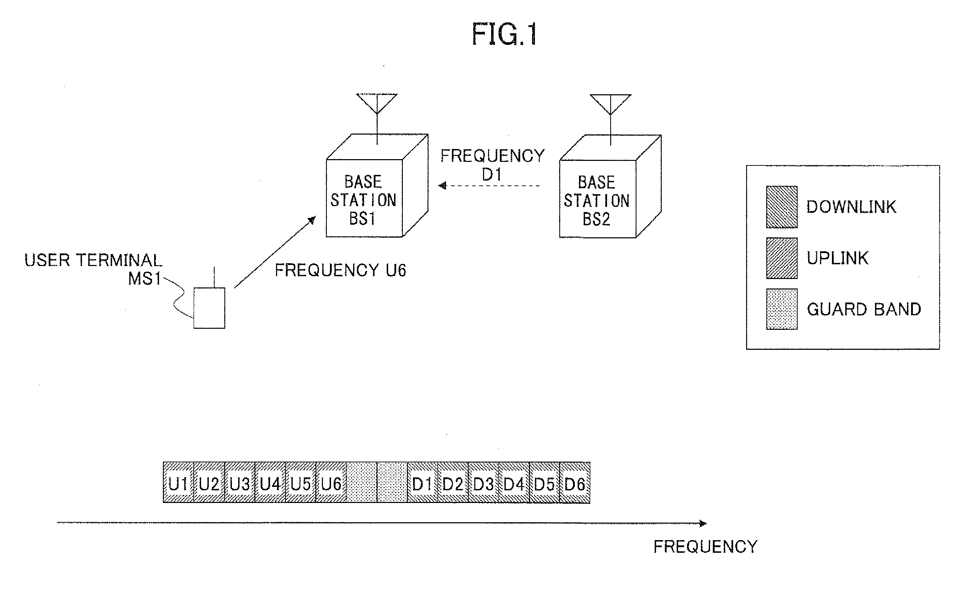

Fig. 1 shows a schematic diagram illustrating interference in uplink from another base station.
Fig. 2 shows a schematic diagram illustrating interference in downlink from another user terminal.
Fig. 3 shows an example of frequency assignment to telecommunication carriers.
Fig. 4 shows a schematic diagram illustrating frequency assignment to avoid interference in uplink from another base station.
Fig. 5 shows a schematic diagram illustrating frequency assignment to avoid interference in uplink from another base station (the case of plural sets of uplink frequency bands and plural sets of downlink frequency bands).
Fig. 6 shows a schematic diagram illustrating time slot allocation to avoid interference in downlink from another user terminal.
Fig. 7 shows a procedure for allocating a time slot in accordance with an embodiment of the present invention.
Fig. 8 shows an example where time slot allocation is not possible.
Fig. 9 shows a procedure for allocating a time slot in accordance with an embodiment of the present invention.
Fig. 10 shows a procedure for allocating a time slot in accordance with an embodiment of the present invention.
Fig. 11 shows an example of radio resource allocation when the number of time slots is decreased.
Fig. 12 shows a block diagram of a user terminal in accordance with an embodiment of the present invention.
Fig. 13 shows a block diagram of a base station in accordance with an embodiment of the present invention.

### DETAILED DESCRIPTION OF THE PREFERRED EMBODIMENTS

### [DESCRIPTION OF NOTATIONS]

- 10: user terminal
- 101: receiving unit
- 103: interference detecting unit
- 105: desirable time slot information generating unit
- 107: transmitting unit
- 109: control signal receiving unit
- 111: transmission-restricting signal generating unit
- 113: time slot number increase request signal generating unit
- 20: base station
- 201: receiving unit
- 203: time slot allocating unit
- 205: control signal generating unit
- 207: transmitting unit
- 209: time slot number controlling unit

### [BEST MODE OF CARRYING OUT THE INVENTION]

With reference to the accompanying drawings, a description is given below with regard to embodiments of the present invention.

### <Embodiment for reducing interference in uplink from another base station>

In a future mobile communication system such as a fourth generation mobile communication system, it is expected that the frequency band assigned to the system will become wider to satisfy demands for high-speed communications. As the frequency band assigned to the system becomes wider, part of the frequency band may be still used in the existing system and the frequency band for the existing system may be gradually made available to the mobile communication system. As a result, it is expected that part of the frequency band is initially assigned to the mobile communication system, and then the rest of the frequency band is gradually added to the mobile communication system.

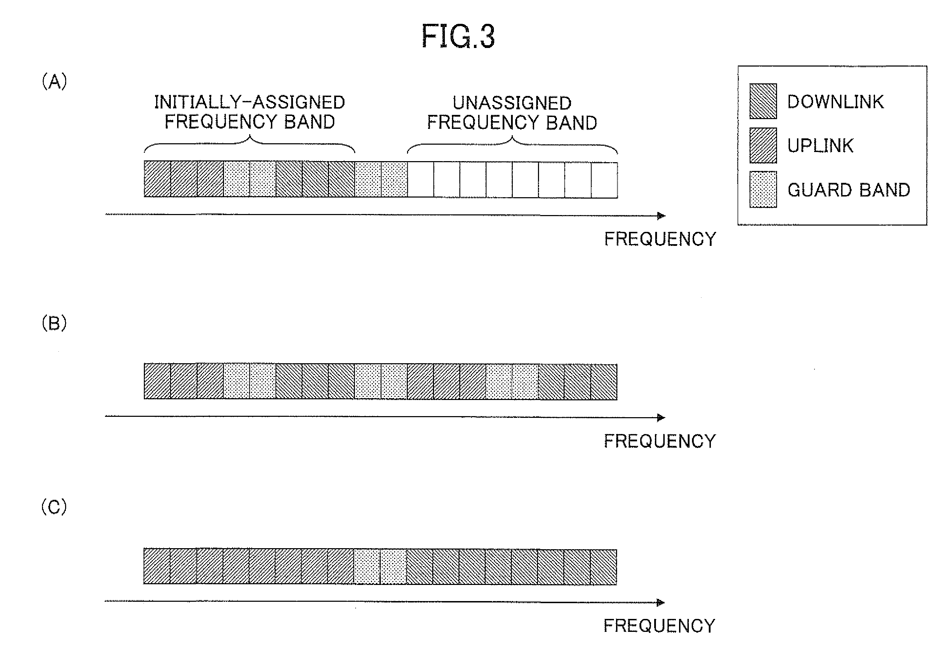

Fig. 3 shows an example of frequency band assignment when frequency bands are gradually added to the mobile communication system employing the FDD scheme. According to the FDD scheme, as described above, a wider guard band is needed when the uplink frequency band and the downlink frequency band are adjacent to each other. Thus, as shown in Fig. 3(A), within the initially-assigned frequency band, the uplink frequency bands and the downlink frequency bands are continuously allocated respectively in order to minimize the guard band.

However, when frequency bands are gradually added to the mobile communication system, plural sets of guard bands may be needed, as shown in Fig. 3(B). In addition, the initially-assigned frequency band may be used by a telecommunication carrier A and the gradually-added frequency band may be used by a telecommunication carrier B. In this case, it is difficult to efficiently use these frequency bands.

It is ideal that the uplink frequency bands and the downlink frequency bands are continuously allocated respectively even if frequency bands are gradually added to the mobile communication system, as shown in Fig. 3(C). However, it is difficult to re-allocate in-service frequency bands, particularly among different telecommunication carriers.

As shown in Fig. 3(B), when the uplink frequency band and the downlink frequency band which are adjacent to each other are assigned to different telecommunication carriers, base stations having interference with each other may be placed nearby, and consequently, one base station may experience interference in uplink from the other base station. In order to avoid interference, a very strict mask or a wider guard band is needed. As used herein, the uplink frequency band and the downlink frequency band which are adjacent to each other refer to the uplink frequency band which is closest to the downlink frequency band and the downlink frequency band which is closest to the uplink frequency band, respectively.

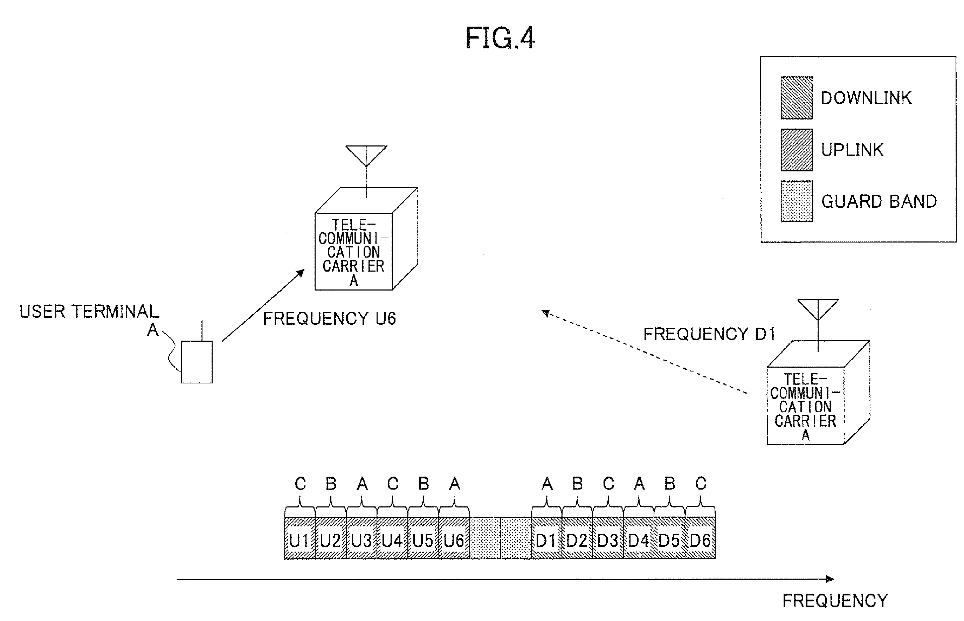

In an embodiment of the present invention, the uplink frequency band and the downlink frequency band which are adjacent to each other are assigned to the same telecommunication carrier. Fig. 4 shows an example of such frequency allocation. In Fig. 4, an uplink frequency band U6 and a downlink frequency band D1 which are adjacent to each other are assigned to the same telecommunication carrier A. Assigning frequency bands in this manner can avoid the situation where base stations having interference with each other are placed nearby. As a result, it is possible to use a looser mask or a narrower guard band.

It is preferable that the uplink frequency band and the downlink frequency band which are adjacent to each other be not used in the same transceiving station (the same base station or the same user terminal). This is because the transceiving station may not receive signals due to interference with signals transmitted from the same transceiving station, when these frequency bands are used in the same transceiving station. Thus, it is preferable that a frequency band close to the guard band be used together with a frequency band far from the guard band (together with a frequency band which is more than a predetermined frequency band away from the guard band). For example, when a frequency band U6 is used as the uplink frequency band, a frequency band D4 is used as the corresponding downlink frequency band.

In addition, N (N >=2) downlink frequency bands which are closest to the uplink frequency band and N (N >=2) uplink frequency bands which are closest to the downlink frequency band may be assigned to the same telecommunication carrier. In other words, one frequency band shown in Fig. 4 may be composed of N (N >= 2) frequency bands.

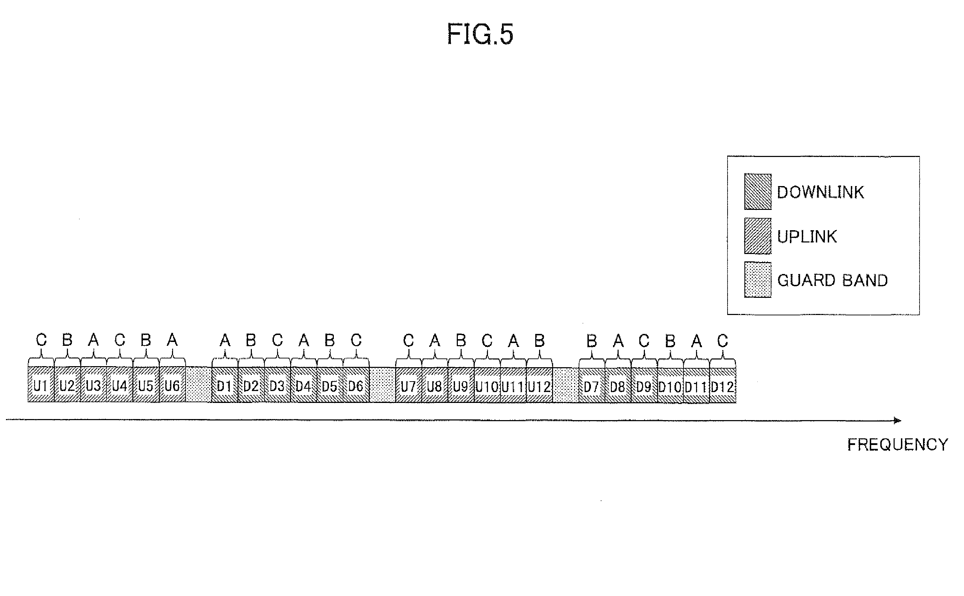

As shown in Fig. 5, when plural sets of guard bands are used between the uplink frequency bands and the downlink frequency bands, it is preferable that the uplink frequency bands and the downlink frequency bands which are adjacent to the guard bands be not always assigned to the same telecommunication carriers. For example, an uplink frequency band U6 and a downlink frequency band D1 are assigned to a telecommunication carrier A, a downlink frequency band D6 and an uplink frequency band U7 are assigned to a telecommunication carrier C, and an uplink frequency band U12 and a downlink frequency band D7 are assigned to a telecommunication carrier B. Assigning frequency bands in this manner can avoid the situation where the same telecommunication carrier is always under the constraint of the guard band.

As described above, by assigning to the same telecommunication carrier the uplink frequency band and the downlink frequency band which are adjacent to each other, the guard band can be reduced. In addition, interference between the uplink frequency band and the downlink frequency band can be reduced.

### <First embodiment for reducing interference in downlink from another user terminal>

In an embodiment of the present invention, in order to reduce interference in downlink from another user terminal, the uplink frequency band and the downlink frequency band which are adjacent to each other are divided into plural time slots. These plural time slots are synchronously transmitted. As described above, the uplink frequency band and the downlink frequency band which are adjacent to each other refer to the uplink frequency band which is closest to the downlink frequency band and the downlink frequency band which is closest to the uplink frequency band, respectively. The uplink frequency band and the downlink frequency band which are adjacent to each other may include one or more frequency bands, respectively.

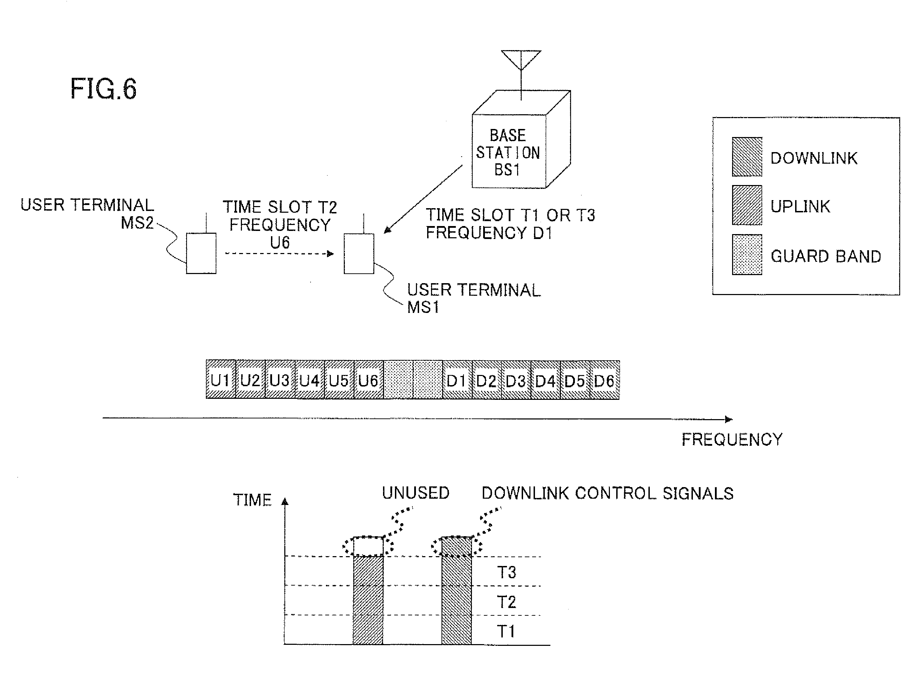

As shown in Fig. 6, the uplink frequency band and the downlink frequency band which are adjacent to each other are divided into plural time slots T1-T3. A base station BS1 allocates different time slots to a user terminal MS1 and a user terminal MS2, so that the user terminal MS1 can receive data from the base station BS1 in the downlink frequency band D1 while the user terminal MS2 transmits data to in the uplink frequency band U6. Thus, even if the two user terminals MS1 and MS2 use the downlink frequency band and the uplink frequency band which are adjacent to each other, respectively, their signals can be separated in the time domain. As a result, interference between them can be reduced.

In addition, one of the time slots in the downlink frequency band may be used to transmit control signals (shown as "downlink control signals" in Fig. 6) in order for the user terminal to establish a link. Typically, a time slot in the uplink frequency band corresponding to that time slot (a time slot in the uplink frequency band corresponding to the downlink control signals) is not used to transmit data from the user terminal (shown as "unused" in Fig. 6). The base station allocates a time slot to the user terminal and transmits allocation information to the user terminal using the time slot for downlink control signals. Providing the time slot for downlink control signals in this manner can ensure the connectivity of the user terminal.

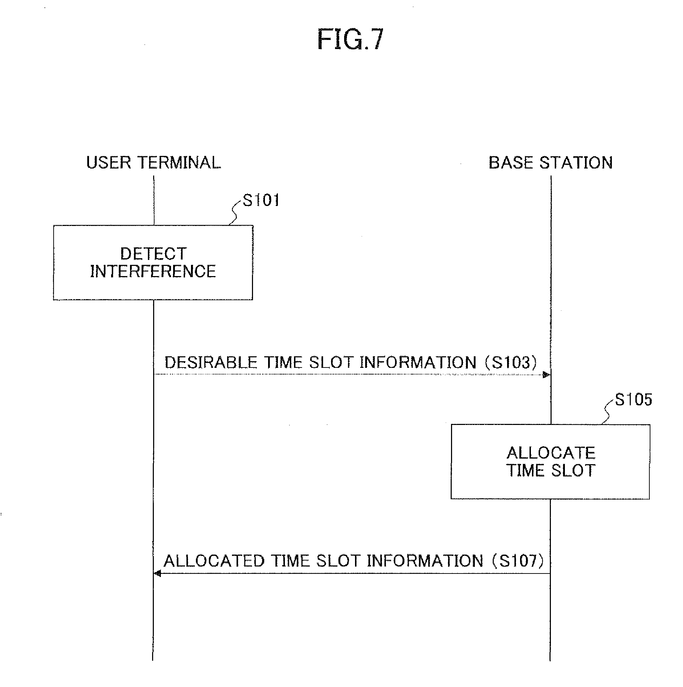

Fig. 7 shows a procedure for allocating a time slot when the uplink frequency band and the downlink frequency band which are adjacent to each other are divided into plural time slots.

When the downlink frequency band which is closest to the uplink frequency band is used, the user terminal detects interference in each time slot in the downlink frequency band (S101). Specifically, the user terminal measures SINR (Signal to Interference plus Noise Ratio) for each time slot and identifies one or more time slots with high interference. The user terminal transmits information about one or more available time slots to the base station (S103). The base station allocates an appropriate time slot among the available time slots (S105). Information about the allocated time slot is transmitted to the user terminal using the time slot for downlink control signals (S107). Then, the base station transmits data to the user terminal in downlink.

According to the procedure shown in Fig. 7, the user terminal can receive downlink signals with high quality, even if an interfering user terminal is situated in the neighborhood.

As shown in Fig. 6, in order to ensure the connectivity of the user terminal, the time slot in the uplink frequency band corresponding to the time slot for downlink control signals is not typically used. In this case, the time slot may be unused, which results in lower frequency usage efficiency. Thus, before the start of downlink data reception, the user terminal may determine whether an interfering user terminal is situated in the neighborhood. Only when no interfering user terminal is situated in the neighborhood, the user terminal may use the time slot in the uplink frequency band corresponding to the time slot for downlink control signals.

Specifically, the user terminal transmits a transmission-restricting signal to neighbor user terminals before the start of downlink data reception. The transmission-restricting signal is a signal indicating the existence of the user terminal to other user terminals. A user terminal which receives the transmission-restricting signal is subject to restrictions in transmitting data. The transmission-restricting signal may include information about a time slot in which the user terminal desires to receive data in the downlink frequency band. Each user terminal detects the transmission-restricting signal and, only when it is determined that no interfering user terminal is situated in the neighborhood, the user terminal can use the time slot in the uplink frequency band corresponding to the time slot for downlink control signals to transmit uplink data. Using the transmission-restricting signal in this manner allows for the efficient use of the uplink frequency band corresponding to the time slot for downlink control signals to transmit uplink data.

It should be noted that the transmission-restricting signal may be transmitted only when an interfering user terminal is situated in the neighborhood. Once the user terminal detects an interfering user terminal in the neighborhood, the user terminal may continue to transmit the transmission-restricting signal for a predetermined period of time. The frequency band used to transmit the transmission-restricting signal my be a frequency band dedicated to the transmission-restricting signal, part of the downlink or uplink frequency band, or an intermediate frequency band between the uplink frequency band and the downlink frequency band.

Instead of using the transmission-restricting signal, each user terminal may individually monitor signals transmitted in the uplink frequency band. When the user terminal determines that no interfering user terminal is situated in the neighborhood, the user terminal may use the time slot in the uplink frequency band corresponding to the time slot for downlink control signals.

### <Second embodiment for reducing interference in downlink from another user terminal>

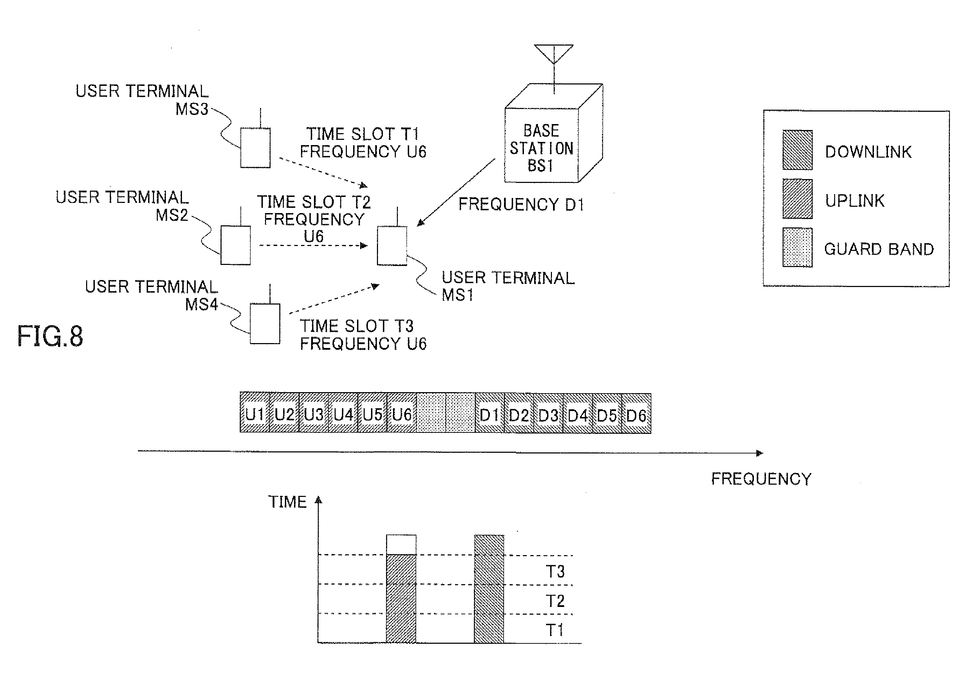

In the embodiment described with reference to Figs. 6 and 7, there is a possibility that no time slot is available when many user terminals are situated in the neighborhood. For example, as shown in Fig. 8, it is assumed that user terminals MS2-MS4 which are situated in the neighborhood of a user terminal MS1 are using time slots T1-T3 in an uplink frequency band U6. Since the user terminal MS1 detects high interference in the time slots T1-T3 in the downlink frequency band D1, the user terminal MS1 cannot notify the base station of information about an available time slot.

In an embodiment of the present invention, the user terminal MS1 transmits to the neighbor user terminals MS2-MS4 a transmission-restricting signal including information about a time slot (for example, T3) which the user terminal MS1 desires to use to receive data in the downlink frequency band D1. As described above, the frequency band used to transmit the transmission-restricting signal my be a frequency band dedicated to the transmission-restricting signal, part of the downlink or uplink frequency band, or an intermediate frequency band between the uplink frequency band and the downlink frequency band. The user terminals MS2-MS4 detect interference and transmit information about one or more available time slots to the base station BS1. When the base station BS1 receives information about the available time slots from each user terminal, the base station BS1 changes the time slots allocated to the user terminals MS2-MS4. For example, the base station BS1 allocates a time slot T2 to the user terminal MS2, a time slot T1 to the user terminals MS3 and MS4. Then, the base station BS1 can allocate the time slot T3 to the user terminal MS1 to transmit data in the downlink frequency band D1.

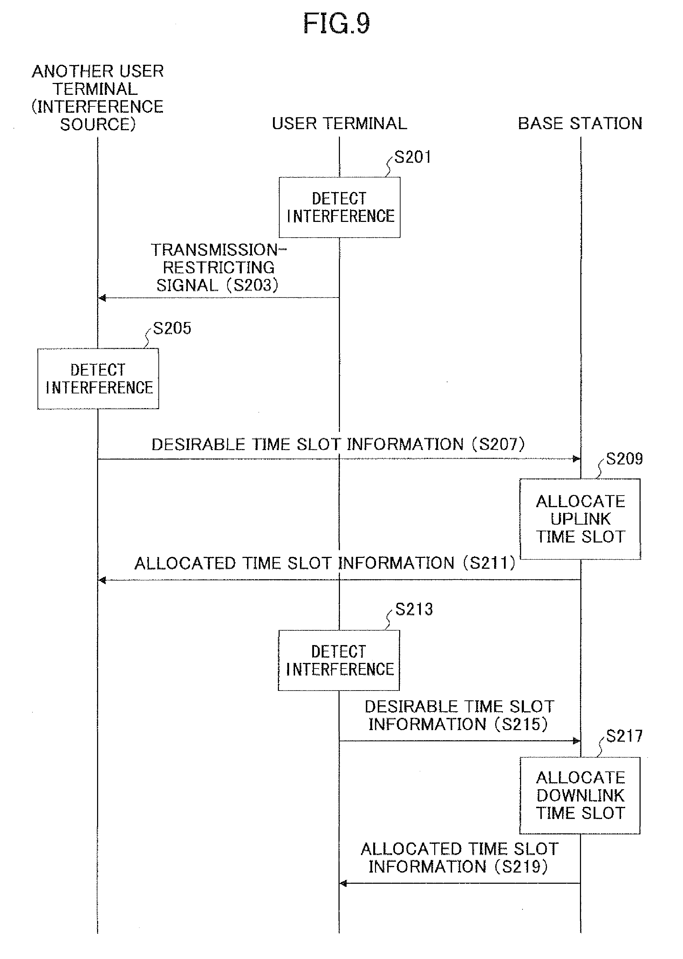

Fig. 9 shows a procedure for allocating a time slot when the transmission-restricting signal is used.

When the downlink frequency band which is closest to the uplink frequency band is used, the user terminal detects interference in each time slot in the downlink frequency band (S201). When high interference is detected in all time slots, the user terminal transmits to interfering user terminals a transmission-restricting signal including information about a time slot which the user terminal desires to use (S203). The user terminal which receives the transmission-restricting signal detects interference in each time slot in the uplink frequency band (S205), and transmits to the base station information about one or more available time slots other than the time slot included in the transmission-restricting signal (S207). The base station allocates an appropriate time slot among the available time slots (S209). Information about the allocated time slot is transmitted to each user terminal using the time slot for downlink control signals (S211). The user terminal which has transmitted the transmission-restricting signal detects interference in the downlink frequency band again (S213). Since the interfering user terminals do not use the time slot included in the transmission-restricting signal, the user terminal does not detect interference in this time slot. Upon detecting interference, the user terminal transmits information about one or more available time slots to the base station (S215). The base station allocates the time slot to the user terminal which has transmitted the transmission-restricting signal (S217). Information about the allocated time slot is transmitted to each user terminal using the time slot for downlink control signals (S219). Then, the base station transmits data to the user terminal in downlink.

### <Third embodiment for reducing interference in downlink from another user terminal>

In the embodiments as described above, the number of time slots is fixed when the downlink frequency band and the uplink frequency band are divided into plural time slots. In an embodiment of the present invention, the number of time slots may be adaptively controlled. When the number of time slots is increased, there is a higher probability that many user terminals can perform communication even if these user terminals are situated in the neighborhood, although the amount of necessary control information will grow.

In this embodiment, a fixed number (for example, two) of time slots is determined as an initial state. When more than two user terminals perform communication in the neighborhood, part of the user terminals cannot perform communication. When the user terminal detects this situation using the transmission-restricting signal or the like, the user terminal transmits a time slot number increase request signal to the base station. When the base station receives the time slot number increase request signal, the base station increases the number of time slots to be allocated. The current number of time slots may be transmitted via the downlink broadcast channel.

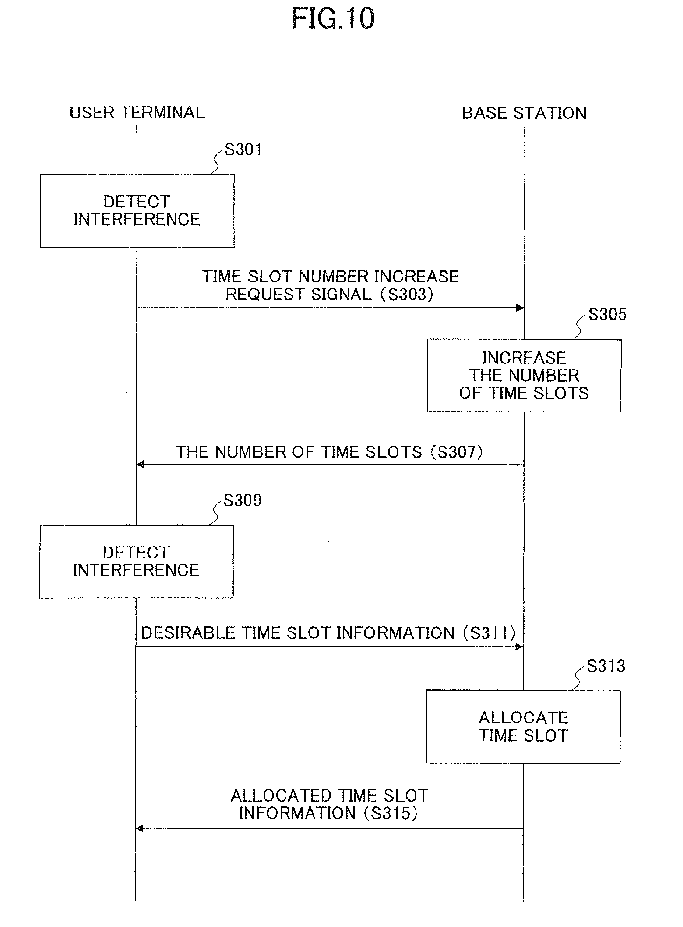

Fig. 10 shows a procedure for allocating a time slot when the number of time slots is adaptively controlled.

When the downlink frequency band which is closest to the uplink frequency band is used, the user terminal detects interference in each time slot in the downlink frequency band (S301). When high interference is detected in all time slots, the user terminal transmits to the base station a time slot number increase request signal requesting an increase in the number of time slots (S303). When the base station receives the time slot number increase request signal, the base station increases the number of time slots (S305), and notifies the user terminal of the number of time slots via the broadcast channel or the like (S307). The user terminal detects interference in the downlink frequency band again (S309), and transmits information about one or more available time slots to the base station (S311). The base station allocates a time slot to the user terminal (S313). Information about the allocated time slot is transmitted to each user terminal using the time slot for downlink control signals (S315). Then, the base station transmits data to the user terminal in downlink.

In order to decrease the number of time slots when the current number of time slots is larger than the number of time slots in the initial state, the base station may decrease the number of time slots by a predetermined number (for example, by one) at a predetermined time interval. Alternatively, the base station may decrease the number of time slots by the predetermined number when the number of simultaneously-transmitting user terminals becomes fewer (when the number of simultaneously-transmitting user terminals is smaller than the current number of time slots). Alternatively, the base station may transmit a time slot number decrease notification signal indicating a decrease in the number of time slots to each user terminal at a predetermined time interval. Alternatively, the base station may transmit the time slot number decrease notification signal when the number of simultaneously-transmitting user terminals becomes fewer. The user terminal which desires not to change the number of time slots may respond with negative acknowledgement (NACK) (or acknowledgement (ACK)) to the time slot number decrease notification signal. When no negative acknowledgement (NACK) is received in response to the time slot number decrease notification signal for a predetermined period of time, the base station can decrease the number of time slots.

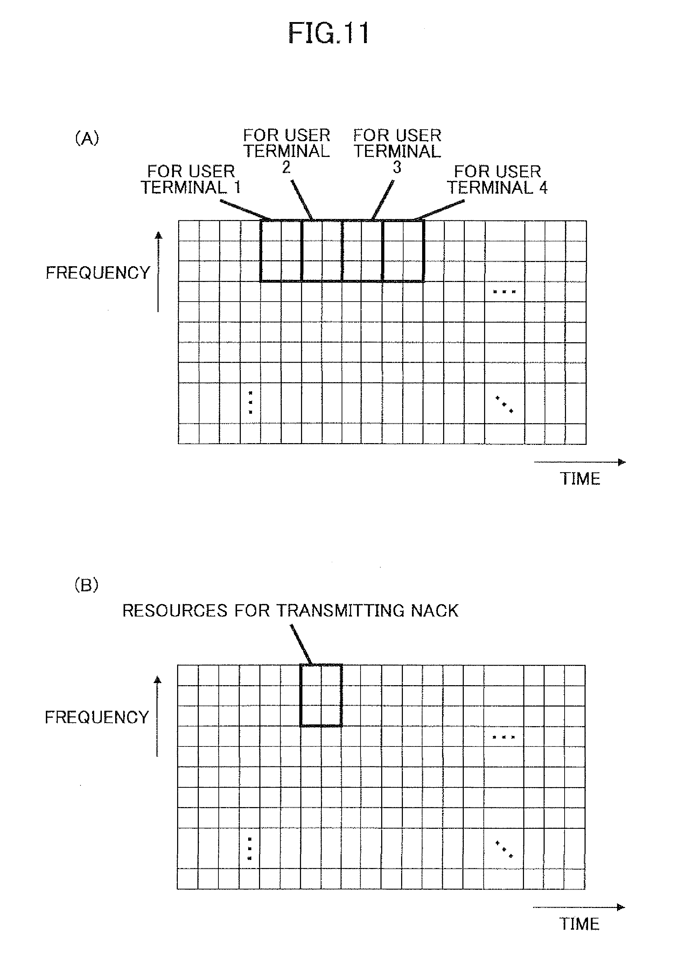

Fig. 11 shows an example of radio resource allocation to NACK in response to the time slot number decrease notification signal. Fig. 11 specifically shows an example of radio resource allocation in the case of OFDMA (Orthogonal Frequency Division Multiplex Access). In OFDMA, radio resources are divided into plural portions in the frequency direction and in the time direction. A symbol is transmitted using one radio resource. These radio resources are used to transmit control signals, pilot signals, and data.

Typically, the base station allocates a dedicated radio resource to each user terminal in order to receive a control signal such as NACK from the user terminal, as shown in Fig. 11(A). However, when a dedicated radio resource is allocated to each user terminal, radio resources are needed corresponding to the number of user terminals. In this embodiment, in particular, a user terminal which does not perform communication may transmit NACK. Thus, it may be necessary to reserve radio resources for the user terminal which does not perform communication.

In order to reduce radio resources needed for NACK, the base station may allocate one or more radio resources which are common to plural user terminals to the NACK, as shown in Fig. 11(B). In this case, when plural user terminals transmit NACK (with the same signal pattern) using the same radio resource, the base station cannot identify which of the user terminals has transmitted NACK. In this embodiment, the base station need not identify which of the user terminals has transmitted NACK, since the base station need only determine that at least one user terminal has transmitted NACK. Allocating one or more common radio resources to NACK can reduce radio resources needed for NACK.

When the user terminal needs a larger number of time slots after the number of time slots is decreased, the user terminal may transmit a time slot number increase request signal again.

While Fig. 11 shows an example of radio resource allocation in the case of OFDMA, one or more common radio resources may be allocated to NACK in the case of TDMA (Time Division Multiple Access) or CDMA (Code Division Multiple Access) to reduce radio resources.

### <Configuration of a user terminal>

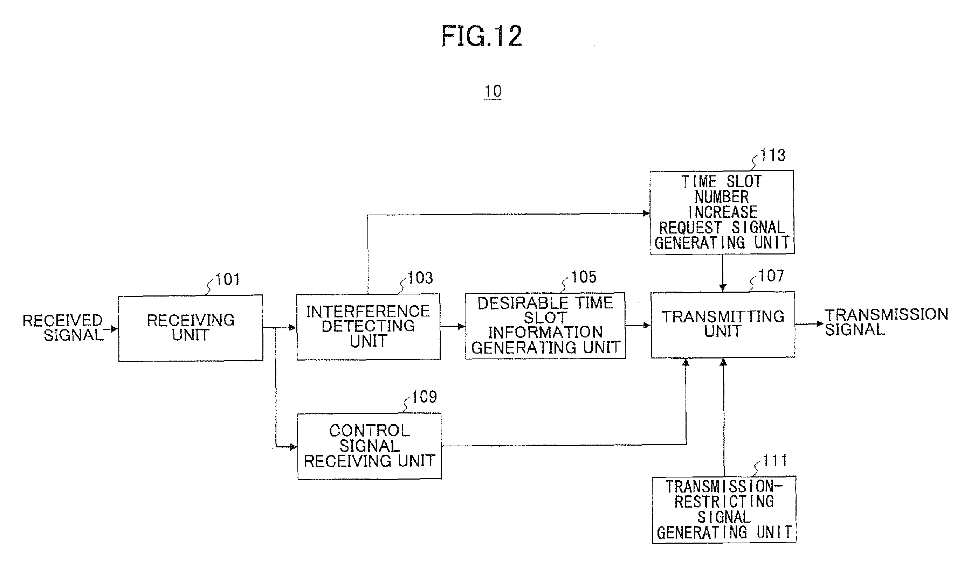

Fig. 12 shows a block diagram of a user terminal 10 in accordance with an embodiment of the present invention. The user terminal 10 includes a receiving unit 101, an interference detecting unit 103, a desirable time slot information generating unit 105, a transmitting unit 107, and a control signal receiving unit 109. The user terminal 10 may also include a transmission-restricting signal generating unit 111 and a time slot number increase request signal generating unit 113.

The receiving unit 101 receives signals from a base station and neighbor user terminals. The interference detecting unit 103 determines whether an interfering user terminal is situated in the neighborhood. For example, the interference detecting unit 103 measures SINR for each time slot in the downlink frequency band and identifies one or more time slots with high interference. The desirable time slot information generating unit 105 generates information about one or more available time slots. The transmitting unit 107 transmits the information about one or more available time slots to the base station. The control signal receiving unit 109 receives from the base station information about time slots used in the downlink frequency band.

The transmission-restricting signal generating unit 111 generates a transmission-restricting signal to restrict transmission from neighbor user terminals, when no time slot is available. The transmission-restricting signal may include information about a time slot used to receive data in the downlink frequency band. On the other hand, when the receiving unit 101 receives a transmission-restricting signal from another user terminal, the interference detecting unit 103 determines whether an interfering user terminal is situated in the neighborhood and the desirable time slot information generating unit 105 generates information about one or more available time slots. The base station allocates a time slot again based on the information about one or more available time slots.

The time slot number increase request signal generating unit 113 generates a time slot number increase request signal requesting an increase in the number of time slots to the base station, when no time slot is available. When the user terminal receives the increased number of time slots via the broadcast channel, the interference detecting unit 103 determines whether an interfering user terminal is situated in the neighborhood and the desirable time slot information generating unit 105 generates information about one or more available time slots. The base station allocates a time slot again based on the information about one or more available time slots.

### <Configuration of a base station>

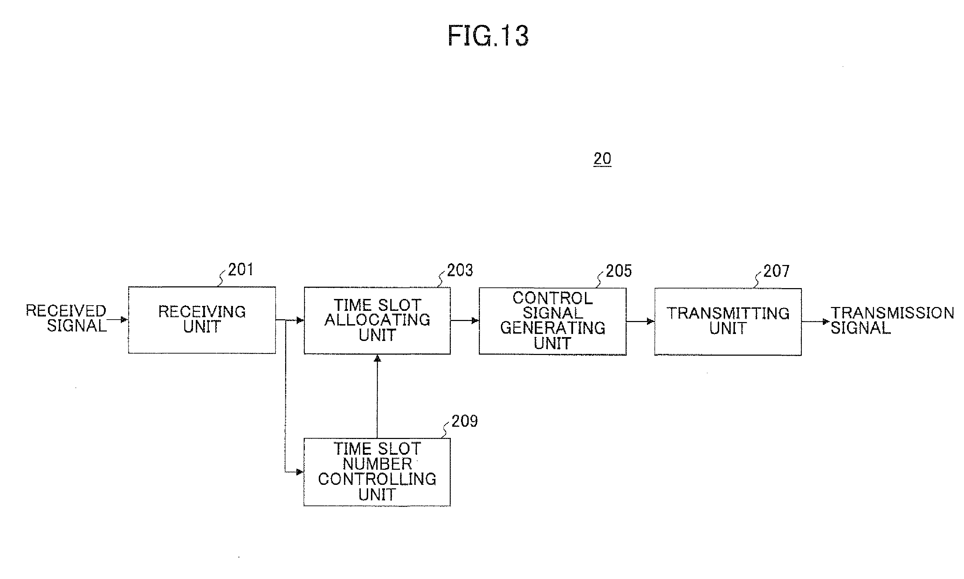

Fig. 13 shows a block diagram of a base station 20 in accordance with an embodiment of the present invention. The base station 20 includes a receiving unit 201, a time slot allocating unit 203, a control signal generating unit 205, and a transmitting unit 207. The base station 20 may also include a time slot number controlling unit 209.

The receiving unit 201 receives signals from user terminals. The time slot allocating unit 203 allocates a time slot to each user terminal based on information about one or more available time slots received from each user terminal. The control signal generating unit 205 generates information about the allocated time slot as a control signal. The transmitting unit 207 transmits the control signal and data to the user terminal.

The time slot number controlling unit 209 increases the number of time slots upon receiving a time slot number increase request signal from the user terminal. The current number of time slots may be transmitted via the broadcast channel. In addition, the time slot number controlling unit 209 decreases the number of time slots at a predetermined time interval or when the number of simultaneously-transmitting user terminals becomes fewer. Alternatively, the time slot number controlling unit 209 may decrease the number of time slots when no negative acknowledgement (NACK) is received in response to a time slot number decrease notification signal.

According to a mobile communication system including the user terminal and the base station in accordance with the embodiment of the present invention, interference between the uplink frequency band and the downlink frequency band which are adjacent to each other can be reduced.

While a time slot is typically used as a unit of allocating a radio resource in a mobile communication system, the time slot as used herein may be any time unit which is formed by dividing radio resources in the time direction. For example, the time slot as used herein may be a time slot which is formed by further dividing a time slot typically used in the mobile communication system in the time direction.

The present invention is not limited to the preferred embodiments thereof, so that various variations and changes are possible within the scope of the present invention.

This international patent application is based on Japanese Priority Application No. 2008-057027 filed on March 6, 2008, the entire contents of which are incorporated herein by reference.

## Claims

1. A mobile communication system comprising:
a base station and a user terminal which communicate with each other according to FDD (frequency division duplex), where an uplink frequency band and a downlink frequency band which are adjacent to each other are divided into plural time slots,
the user terminal including
an interference detecting unit configured to detect interference in the downlink frequency band; and
a time slot information generating unit configured to generate information about an available time slot in the downlink frequency band based on the detected interference; and
the base station including
a time slot allocating unit configured to allocate a time slot to be used in the downlink frequency band based on the information about the time slot received from the user terminal.

2. The mobile communication system as claimed in Claim 1, wherein:
the base station uses a time slot for downlink control signals to transmit information about the allocated time slot.

3. The mobile communication system as claimed in Claim 2, wherein:
the interference detecting unit in the user terminal measures a received level of a signal in each time slot in the uplink frequency band, and
the time slot information generating unit in the user terminal generates information that a time slot in the uplink frequency band corresponding to the time slot for the downlink control signals can be used when the received level is below a predetermined threshold.

4. The mobile communication system as claimed in Claim 2, wherein:
the user terminal further comprises a transmission-restricting signal generating unit configured to generate a transmission-reatricting signal indicating an existence of the user terminal to other user terminals.

5. The mobile communication system as claimed in Claim 4, wherein:
the interference detecting unit in the user terminal measures a received level of a transmission-restricting signal transmitted from another user terminal, and
the time slot information generating unit in the user terminal generates information that a time slot in the uplink frequency band corresponding to the time slot for the downlink control signals can be used when the received level is below a predetermined threshold.

6. The mobile communication system as claimed in Claim 4, wherein:
the transmission-restricting signal includes a time slot to be used for the user terminal to receive data in the downlink frequency band, and
the time slot information generating unit in the user terminal generates, as the information about the available time slot, information about a time slot other than the time slot included in the transmission-restricting signal.

7. The mobile communication system as claimed in Claim 1, wherein:
the user terminal further comprises a time slot number increase request signal generating unit configured to generate a time slot number increase request signal requesting an increase in the number of time slots, when the time slot information generating unit determines that no time slot is available, and
the base station further comprises a time slot number controlling unit configured to increase the number of time slots upon receiving the time slot number increase request signal.

8. The mobile communication system as claimed in Claim 7, wherein:
the time slot number controlling unit in the base station decreases the number of time slots at a predetermined time interval or when the number of simultaneously-transmitting user terminals becomes fewer.

9. The mobile communication system as claimed in Claim 7, wherein:
the time slot number controlling unit in the base station transmits a time slot number decrease notification signal indicating a decrease in the number of time slots, and decreases the number of time slots when no negative acknowledgement is received in response to the time slot number decrease notification signal.

10. The mobile communication system as claimed in Claim 9, wherein:
the base station allocates a radio resource which is common to plural user terminals to the negative acknowledgement in response to the time slot number decrease notification signal.
